# FASCICULE DE BREVET EUROPEEN

(11) **EP 3 365 591 B1**
(45) Date de publication et mention de la délivrance du brevet: **01.07.2020**
(21) Numéro de dépôt: 16785152.6
(22) Date de dépôt: 21.10.2016
(51) Int. Cl.: F16L 59/02, F16L 59/14

(54) **PROCÉDÉ D'ASSEMBLAGE D'UNE CONDUITE RIGIDE ET CONDUITE ASSOCIÉE**
VERFAHREN ZUR MONTAGE EINER STARREN ROHRLEITUNG UND ZUGEHÖRIGE ROHRLEITUNG
METHOD FOR ASSEMBLING A RIGID CONDUIT AND ASSOCIATED CONDUIT

(30) Priorité: 22.10.2015 FR 1560097
(43) Date de publication de la demande: 29.08.2018
(73) Titulaire: Technip France, 92400 Coubevoie (FR)
(72) Inventeur: GOORIS, François, 92210 Saint Cloud (FR); VIALE, Sébastien, 78000 Versailles (FR); ESPINASSE, Philippe, 76420 Bihorel (FR); RAGEOT, Olivier, 75009 Paris (FR); BOUSTANY, Laure, 94210 La Varenne Saint-Hilaire (FR)
(74) Mandataire: Lavoix
(86) Numéro de dépôt international: PCT/EP2016/075399
(87) Numéro de publication internationale: WO 2017/068135

(56) Documents cités:
- EP-A1- 2 327 920
- WO-A1-2014/188183
- DE-A1- 2 412 003
- FR-A1- 2 343 196
- GB-A- 2 388 641

## Description

La présente invention concerne un procédé d'assemblage d'une conduite rigide destinée à être placée dans une étendue d'eau, la conduite rigide comprenant un tube interne métallique, une enveloppe isolante d'isolation thermique formée d'un assemblage de parties isolantes et une couche externe, le procédé comprenant les étapes suivantes :
- fourniture du tube interne métallique,
- formation de l'enveloppe isolante, et
- formation de la couche externe autour de l'enveloppe isolante.

Un tel procédé est destiné à la fabrication de conduites rigides de transport d'hydrocarbures dans une étendue d'eau.

Le transport des hydrocarbures dans une étendue d'eau implique une baisse de température due aux échanges de chaleur avec le milieu environnant. En effet, les hydrocarbures passent d'une température de l'ordre de 50°C à 150°C dans le réservoir à une température de l'ordre de quelques degrés. Cette chute de température peut conduire à une augmentation de la viscosité des hydrocarbures entrainant une baisse du débit au sein des conduites ou à la formation d'hydrates et de paraffines souvent à l'origine du blocage des conduites.

Pour pallier à cette baisse de température, des conduites à double enveloppe ont été développées (« pipe in pipe » en anglais). Dans ce type de conduite, le fluide est transporté à travers un tube interne qui est lui-même situé à l'intérieur d'un tube externe assurant une isolation thermique passive.

Cette solution a été améliorée en ajoutant à l'isolation thermique passive un chauffage actif des conduites en enroulant directement autour du tube interne des câbles chauffants (« Electrically Trace Heated Pipe-in-Pipe », ETH-PiP).

Cependant, une telle solution s'avère coûteuse et la double enveloppe en acier d'une telle conduite représente un poids relativement élevé qui rend l'installation difficile notamment en grande profondeur.

Une solution alternative qui permet de répondre à ces problèmes est décrite dans le document US 6, 940,054.

Ce document décrit un tube isolé thermiquement autour duquel sont entourés des câbles chauffants et des câbles électriques. Le tube comprend des moyens d'isolation thermique destinés à réduire les échanges de chaleur avec le milieu environnant. Les moyens d'isolation comprennent des membres internes et externes enroulés autour du tube. Les membres externes et internes forment des canaux longitudinaux permettant d'accueillir les câbles chauffants. Autour des membres d'isolation externes est enroulée une bande externe destinée à maintenir les membres d'isolation interne et externe autour du tube.

Dans le procédé de fabrication décrit dans US 6 940 054 B1, les parties isolantes de grande longueur sont enroulées en hélice autour du tube interne pour former une enveloppe isolante.

La formation de l'enveloppe en enroulant les parties isolantes nécessite une machine tournante, permettant la pose en hélice des parties isolantes, décrite dans le document.

Ce type de dispositif est très volumineux et encombrant. Il n'est pas possible de faire l'assemblage de la conduite sur un site qui n'en possède pas, a fortiori à bord d'un navire de mise en place de la conduite rigide.

De plus, certains sites d'assemblage ne sont pas configurés pour recevoir un tel type de dispositif. L'assemblage d'une conduite rigide par un tel procédé n'est donc pas possible dans l'ensemble des sites d'assemblage.

Enfin, ces dispositifs sont coûteux, ainsi que la construction de nouveaux sites adaptés pour les recevoir.

GB 2 388 641 A décrit une conduite rigide isolé thermiquement, comprenant des bandes de matériau enroulées autour de la conduite. DE 24 12 003 A1 décrit un câble ou un tube entouré d'une protection formée de parties hélicoïdales. EP 2 327 920 A1 décrit une conduite comprenant une enveloppe d'isolation thermique. WO 2014/188183 A1 décrit un corps en mousse présentant une forme hélicoïdale prévu pour entourer une conduite et l'isoler thermiquement. FR 2 343 196 A1 décrit un élément de tuyauterie comprenant une isolation comprenant au moins deux couches enroulées hélicoïdalement.

Un but de l'invention est de proposer un procédé d'assemblage d'une conduite rigide isolée thermiquement qui soit simple et peu coûteux à mettre en œuvre et qui ne nécessite pas d'utiliser des machines lourdes d'assemblage de l'enveloppe isolante.

A cet effet, l'invention a pour objet un procédé selon la revendication 1.

L'invention sera mieux comprise à la lecture de la description qui va suivre, donnée uniquement à titre d'exemple, et faite en se référant aux dessins annexés, sur lesquels :
- la figure 1 est une vue schématique en coupe d'un mode de réalisation d'une conduite d'après l'invention,
- la figure 2 est une vue schématique de côté partiellement écorchée de la conduite de la figure 1,
- la figure 3 est une vue en perspective de deux parties isolantes superposées d'après un mode de réalisation de la conduite,
- la figure 4 est un schéma fonctionnel d'un mode de réalisation du procédé de l'invention,
- la figure 5 est une vue schématique en coupe d'un autre mode de réalisation d'une conduite d'après l'invention, et

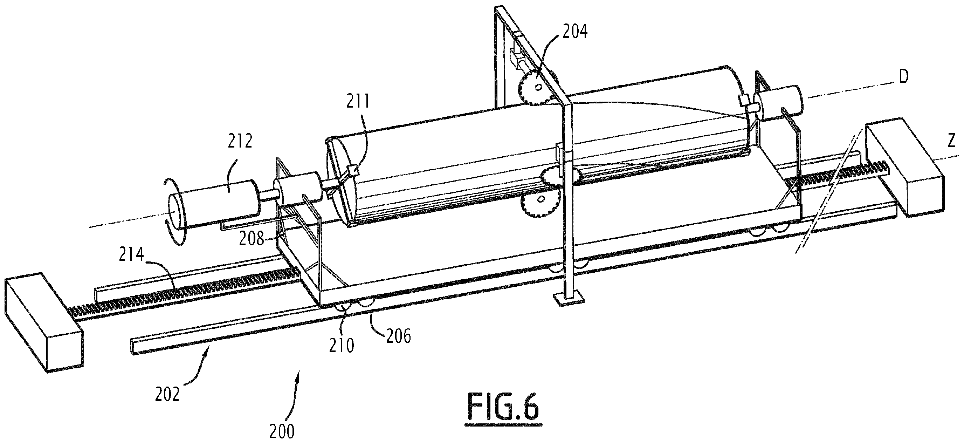

- la figure 6 est une vue schématique en perspective d'une machine apte à découper un tube isolant en hélices ;
- la figure 7 est une vue en perspective partiellement éclatée d'une autre conduite.

Les termes « au-dessus » et « en-dessous » faisant référence à des éléments de la conduite sont définis radialement par rapport à un axe central de la conduite. Le terme « au-dessous » s'entend comme plus proche de l'axe X et le terme « au-dessus » s'entend comme plus éloigné.

Au sens de la présente invention, un élément est généralement « métallique » lorsque plus de 50% en masse de cet élément est formé de métal. Il est généralement « non métallique » lorsque 50% ou moins en masse de cet élément est formé de métal.

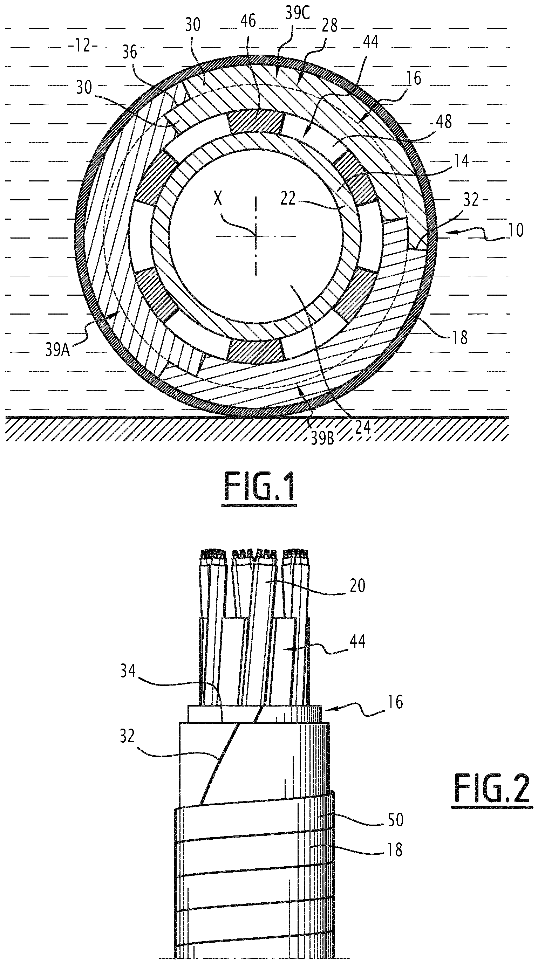

Une première conduite rigide 10 de transport de fluide fabriquée par un procédé d'assemblage selon l'invention est illustrée partiellement par les figures 1 et 2.

La conduite rigide 10 est destinée à être immergée dans une étendue d'eau 12, pour transporter un fluide à travers l'étendue d'eau 12.

La conduite rigide 10 est par exemple posée sur le fond de l'étendue d'eau 12 pour raccorder une installation de collecte de fluide, tel qu'un puits, à un ensemble de convoyage de fluide vers la surface. En variante, la conduite rigide 10 s'étend à travers l'étendue d'eau 12, depuis le fond de l'étendue d'eau 12 vers la surface.

L'étendue d'eau 12 est par exemple une mer, un océan, un lac ou un fleuve. La profondeur de l'étendue d'eau 12 est généralement supérieure à 10 m, et est par exemple comprise entre 100 m et 5000 m.

Le fluide prélevé et convoyé par la conduite rigide 10 est notamment un hydrocarbure, tel que du pétrole ou du gaz naturel.

Comme illustré par les figures 1 et 2, la conduite rigide 10 comporte un tube interne métallique 14, une enveloppe isolante 16 d'isolation thermique non métallique disposée autour du tube interne métallique 14 et une couche externe 18 disposée autour de l'enveloppe isolante 16. La couche externe 18 est destinée à entrer en contact avec l'étendue d'eau 12 dans laquelle est plongée la conduite 10.

La conduite rigide 10 comporte en outre au moins une ligne fonctionnelle 20, ici une ligne de chauffage, disposée à l'extérieur du tube interne métallique 14.

Le tube interne 14 comporte un assemblage bout-à-bout de tronçons de tube 22. Il délimite un passage interne 24 continu de circulation du fluide à travers plusieurs tronçons de tube 22, entre les extrémités de la conduite 10.

Le tube interne 14 présente par exemple un diamètre extérieur compris entre 10 cm et 130 cm. Le diamètre extérieur du passage interne 24 est par exemple compris entre 8 cm et 127 cm.

Le tube interne 14 présente un axe longitudinal X. Le passage interne 24 s'étend suivant l'axe longitudinal X.

Chaque tronçon de tube 22 est réalisé à base de métal, par exemple en acier, en acier inoxydable et en autres aciers à teneur en Nickel variable ou combinaison de ces matériaux.

Les tronçons de tube en acier 22 sont, par exemple, revêtus intérieurement d'acier inoxydable, d'un alliage métallique résistant à la corrosion (du type Inconel® 625 ou 835 par exemple) ou d'un plastique. Typiquement l'épaisseur du revêtement est comprise entre 1 mm et 7 mm, et généralement sensiblement égale à 3 mm.

Chaque tronçon de tube 22 présente une longueur comprise avantageusement entre 12 m et 96 m.

Le tronçon 22 est avantageusement muni extérieurement d'une couche de protection, telle qu'une couche d'époxy lié par fusion.

En plus de la couche d'époxy ou alternativement à cette couche, le tronçon est muni d'une couche extérieure de protection en polyéthylène (PE) ou en polypropylène (PP). Cette couche a une épaisseur comprise entre 2 mm et 4 mm.

Les extrémités de chaque paire de tronçons de tube 22 adjacents sont fixées entre elles au niveau d'une jonction pour former un tube 14 continu. Cette fixation est effectuée par exemple par soudure.

Alternativement, le tube interne 14 est formé d'un unique tronçon ayant sensiblement la longueur de la conduite rigide.

L'enveloppe isolante 16 présente une épaisseur comprise entre 20 mm et 180 mm.

L'enveloppe isolante 16 comprend au moins une couche isolante 28.

Au moins une couche isolante 28 de l'enveloppe isolante 16 est formée de plusieurs parties isolantes 30. Les parties isolantes 30 sont disposées autour de la circonférence de chaque tronçon 22 du tube 14 pour le recouvrir.

Au niveau de chaque section transversale d'un tronçon 22, la couche isolante 28 comprend avantageusement au moins trois parties isolantes 30. Ceci permet notamment d'enserrer le tube interne 14 et de faciliter l'assemblage de la conduite en plaquant les parties isolantes sur le tube. La pose de la couche isolante 28 lors de l'assemblage de la conduite ne nécessite pas une machine lourde d'assemblage.

Selon le diamètre du tube interne 14, la couche isolante 28 comprend, par exemple, entre 3 et 6 parties isolantes.

Les parties isolantes 30 ont des propriétés d'isolation thermique. Les parties isolantes 30 sont formées d'un matériau isolant thermiquement, notamment un polymère, par exemple une polyoléfine (PP ou PE) ou un polyuréthane (PU), ou un polymère chargé, par exemple un polypropylène (PP) chargé de billes de verre. La conductivité thermique du matériau isolant est par exemple inférieure à 0,4 W/(m.K), et avantageusement inférieure à 0,2 W/(m.K).

Dans un mode de réalisation particulier, les parties isolantes 30 sont, par exemple, de matériau différent selon la couche à laquelle elles appartiennent. Les parties isolantes plus proches du tube interne 14 sont réalisées en PP solide. Les parties isolantes plus éloignées du tube interne 14 sont réalisées en PP chargé en billes de verre ou en mousse syntactique de PP, par exemple, dans le cas où la conduite est destinée à être utilisée à de faibles et/ou moyennes profondeurs, c'est-à-dire pour des profondeurs inférieures à 1 000 m.

Les parties isolantes 30 sont disposées adjacentes les unes avec les autres. Les parties isolantes 30 sont par exemple espacées d'un jeu circonférentiel, compris entre 0% et 20% de la circonférence de la couche externe. La présence d'un jeu circonférentiel permet notamment de pallier à une hétérogénéité de taille du tube interne 14 et/ou des parties isolantes 30.

Les parties isolantes 30 présentent une forme hélicoïdale. Les parties isolantes 30 ont par exemple la forme d'une lame enroulée en hélice.

Comme on le verra plus bas, chaque partie isolante 30 est formée par découpe longitudinale d'un tube en matériau isolant suivant des lignes de découpe en hélice.

Avantageusement, la dimension la plus importante de chaque partie isolante 30 est inférieure à la longueur d'un tronçon 22 du tube interne 14. Ainsi, des parties isolantes 30 sont placées bout à bout le long du tube interne 14 pour recouvrir le tube interne 14. La dimension la plus importante de chaque partie isolante 30 est inférieure à 4 m, et de préférence comprise entre 1 m et 4 m. Ainsi, une partie isolante est manipulable par un opérateur.

L'épaisseur des parties isolantes 30 est définie radialement par rapport à l'axe longitudinal X.

L'épaisseur des parties isolantes 30 est par exemple comprise entre 10 mm et 90 mm.

Chaque partie isolante 30 présente deux bords longitudinaux 32 et deux bords transversaux 34.

La longueur de chaque partie isolante 30 est égale à la moyenne des longueurs de ses bords longitudinaux 32.

La largeur de chaque partie isolante 30 est définie similairement à la longueur avec les bords transversaux 34.

La longueur de chaque partie isolante 30 est supérieure à sa largeur.

Les bords longitudinaux 32 forment un angle a, appelé angle d'hélice, avec un axe parallèle à l'axe longitudinal X du tube interne 14. L'angle d'hélice est compris entre 0° et 75°, l'angle d'hélice étant différent de 0°, et plus particulièrement entre 1° et 75°.

Dans l'exemple représenté sur les figures 1 et 2, les bords transversaux 34 des parties isolantes 30 sont droits.

L'enveloppe isolante 16 comprend au moins deux couches isolantes formées de parties isolantes, appelées ici couche inférieure et couche supérieure. Les deux couches isolantes ont avantageusement le même nombre de parties isolantes.

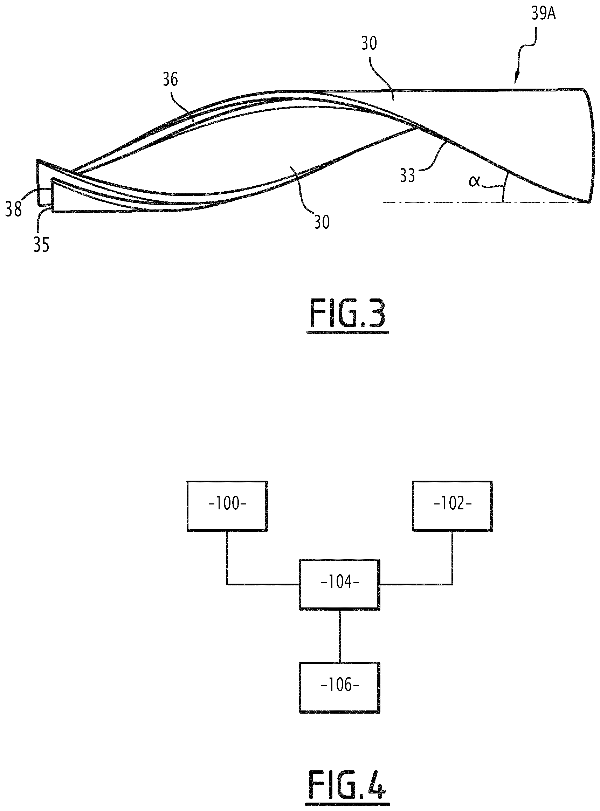

Chaque partie isolante de la couche supérieure est superposée avec un certain décalage à une partie isolante de la couche inférieure, comme représenté à la figure 3. Le décalage est circonférentiel et/ou selon l'axe de l'hélice.

Le décalage circonférentiel est, par exemple, compris entre 3% et 50% de la dimension de la partie isolante. En d'autre terme, le recouvrement entre la partie isolante de la couche supérieure et la partie isolante superposée de la couche inférieure est compris entre 50 et 97%.

Eventuellement, les parties isolantes superposées sont assemblées l'une sur l'autre.

Chaque paire de parties isolantes 30 superposées forment une section isolante 39A, dont une est représentée sur la figure 3.

Les parties isolantes superposées ont ici sensiblement la même forme, avec des bords droits.

Chaque section isolante 39A définit alors au moins un bord longitudinal 33 et/ou transversal 35 en forme de marche ou de gradin longitudinal 36 et/ou de gradin transversal 38.

Comme visible sur la figure 2, les gradins longitudinaux 36 de deux sections isolantes adjacentes 39A, 39B sont de formes complémentaires et sont imbriqués l'un dans l'autre.

De même, les gradins transversaux 38 de deux sections isolantes bout à bout sont de formes complémentaires et sont imbriqués l'un dans l'autre.

Cette disposition limite les transferts thermiques par convection de l'eau au niveau des discontinuités. Elle améliore la résistance mécanique des parties isolantes 30

Dans un mode de réalisation, l'enveloppe isolante 16 comprend d'autres couches isolantes, par exemple formées de parties isolantes non hélicoïdales.

Avantageusement, l'enveloppe isolante 16 comprend une couche interne discontinue 44. La couche discontinue 44 est formée de parties isolantes 46 disjointes.

Les parties isolantes 46 sont formées d'un matériau polymère, par exemple en polypropylène (PP), en polyéthylène (PE) ou en polyuréthane (PU).

Chaque partie isolante 46 a une largeur comprise entre 1/16^{ième} et un quart de la circonférence du tube interne 14. Elle a une épaisseur comprise entre 5 mm et 60 mm.

Les parties isolantes disjointes 46 définissent entre elles des rainures 48. Les rainures 48 sont destinées à recevoir la ou les lignes fonctionnelles 20.

Les rainures 48 sont inondées avec de l'eau de mer ou de l'eau inhibée, c'est-à-dire comportant des agents inhibiteurs de corrosion tels que des composés amines.

Dans l'exemple représenté à la figure 2, les parties isolantes 46 sont hélicoïdales et définissent des rainures hélicoïdales 48.

La couche discontinue 44 est la couche de l'enveloppe isolante 16 la plus proche du tube interne 14.

Alternativement, les parties de la couche discontinue 44 ne sont pas isolantes. La couche discontinue 44 est alors située entre le tube interne 14 et l'enveloppe isolante 16.

La couche externe 18 comprend au moins une bande externe 50, avantageusement entre une et quatre bandes externes 50 superposées.

La bande externe 50 est par exemple composée de polymère à haute ou moyenne densité tel que le polyéthylène (PE) comprenant des renforts fibreux du type fibres d'aramide ou poly(p-phénylènetéréphtalamide) (PPD-T).

La largeur de la bande externe 50 est comprise entre 50 mm et 400 mm.

La bande externe 50 est enroulée hélicoïdalement autour de l'enveloppe isolante 16 avec un angle d'enroulement à faible pas par exemple compris entre 1° et 80° avec l'axe X. La bande externe 50 est enroulée avec un recouvrement compris entre 0% et 80%.

Dans le cas d'une pluralité de bandes externes 50, elles sont par exemple enroulées avec des angles d'enroulement différents, voire opposés.

Avantageusement, la bande externe 50 est réalisée en un matériau non métallique. Elle est partiellement ou totalement fusionnée.

La bande externe 50 fournit un maintien pour assurer l'intégrité de la conduite.

La ligne fonctionnelle 20 est par exemple une ligne électrique propre à réaliser un chauffage par traçage électrique sur le tube interne 14, à l'extérieur du tube interne 14. Elle est placée en contact thermique avec la surface extérieure du tube interne 14, soit en étant directement posée contre la surface métallique d'un tronçon de tube 22, soit en étant posée sur la couche de protection lorsque cette couche est présente.

La ligne fonctionnelle 20 est par exemple réalisée par un cordon de câbles ou de fils conducteurs ou un tube métallique à fonction hydraulique et/ou un câble armé et étanche accueillant des fibres optiques de signal et de contrôle de température du type distribué (DTS) ou semi-distribué (Bragg).

Les différents conducteurs électriques de la ligne fonctionnelle 20 sont reçus dans une gaine métallique et/ou plastique d'une épaisseur sensiblement égale à 1 mm.

Les fibres optiques sont reçues dans une gaine métallique avec un revêtement anticorrosion en plastique.

Elle présente, dans l'exemple représenté sur la figure 2, une section transversale allongée avec une largeur supérieure à son épaisseur.

La ligne fonctionnelle 20 est ici disposée dans les rainures 48 de la couche discontinue 44.

La ligne fonctionnelle 20 est disposée en hélice. Le pas d'hélice de la ligne fonctionnelle 20 est identique au pas d'hélice des parties isolantes 46.

La ligne fonctionnelle 20 s'étend continûment le long de la conduite 10, le long d'au moins deux tronçons de tube 22 adjacents, avantageusement le long d'au moins 50% des tronçons de tube 22 de la conduite 10.

La ligne 20 s'étend également continûment en regard de chaque jonction entre deux tronçons de tube 22 adjacents.

La ligne 20 présente ainsi une longueur supérieure à celle d'un tronçon 22, avantageusement supérieure à celle d'au moins deux tronçons 22. Il n'est donc pas nécessaire de prévoir des connecteurs électriques sur la ligne 20 entre chaque paire de tronçons 22 adjacents au niveau de la jonction.

Elle présente aussi une longueur supérieure à celle de chaque partie isolante 30.

Un procédé d'assemblage d'une conduite rigide 10 tel que décrit précédemment va maintenant être décrit, en référence à la figure 4.

Le procédé comprend les étapes suivantes :
- une étape 100 de fourniture d'un tube interne 14,
- une étape 102 de fourniture de parties isolantes 30 en les formant à partir d'un tube isolant,
- une étape 104 de montage des parties isolantes autour du tube interne 14 pour former l'enveloppe isolante, et
- une étape 106 de formation de la couche externe 18.

Initialement à l'étape 100, un tube interne 14 tel que décrit précédemment est fourni.

Le tube interne 14 est fourni en un seul tronçon 22 ou en plusieurs tronçons 22.

Dans le cas d'une pluralité de tronçons 22 à assembler, une extrémité d'un deuxième tronçon est placée en regard de l'extrémité libre d'un premier tronçon de tube assemblé. Puis, une jonction est réalisée entre ces deux tronçons de tube, par exemple par soudure entre elles des extrémités. Le revêtement anticorrosion au niveau de la zone de soudure est alors reconstitué. Ensuite, l'assemblage ainsi réalisé est déplacé pour ajout d'un nouveau tronçon de tube.

Alternativement les tronçons sont assemblés au fur et à mesure de l'étape 104 de montage.

Lors de l'étape 102 de fourniture de parties isolantes 30, une pluralité de parties isolantes 30 sont réalisées, et de préférence au moins trois pour chaque longueur du tube interne 14 à couvrir.

Avantageusement, les parties isolantes 30 sont réalisées par découpe à partir d'un tube de matériau isolant par une machine 200 au cours d'une étape de découpe.

Le tube isolant présente un axe principal D. Il présente une longueur inférieure à celle d'un tronçon 22 du tube interne 14.

La machine comprend un système de guidage du tube 202 et une pluralité de d'outillages de découpe 204.

Le système de guidage 202 présente un axe de guidage Z. Le système de guidage est apte à faire avancer le tube isolant en translation suivant l'axe de guidage.

Le système de guidage comprend par exemple au moins un rail 206 selon l'axe Z et un support 208 monté sur des roues 210 prévues pour se déplacer sur le rail 206.

Le support 208 est apte à maintenir le tube isolant, tel que l'axe de guidage Z et l'axe principal D du tube isolant soient parallèles.

Le support 208 comprend par exemple deux parties. Chaque partie est, par exemple, placée à une extrémité du tube isolant et maintient le tube à l'aide de mors ajustables 211. La distance entre les deux parties est réglable par rapport au tube isolant à découper.

Le support 208 est apte à se déplacer en translation selon l'axe de guidage Z sur le rail 206, par exemple à l'aide d'une crémaillère 214 activée par un moteur propre.

Le système de guidage est également apte à faire tourner le tube isolant autour de son axe principal à une vitesse de rotation réglable.

Le système de guidage 202 comprend par exemple un moteur 212 monté sur le support 208 et apte à entraîner le tube isolant en rotation.

Les outillages de découpe 204 sont placés autour de l'axe principal D.

Les outillages de découpe 204 sont aptes à découper le tube isolant introduit dans la machine. Les outillages de découpe 204 sont, par exemple, des scies circulaires ou à bande, des jets d'eau ou des lasers.

La machine 202 comprend par exemple trois scies identiques placées sensiblement à 120° les unes des autres autour de l'axe principal D à une distance sensiblement égale au rayon du tube isolant.

Dans un mode de réalisation, la machine 202 comprend des buses de refroidissement à eau ou à air pulsé au niveau des outillages de découpe.

Le procédé de réalisation de parties isolantes 30 va maintenant être décrit.

Avant l'étape de découpe, le tube isolant est avantageusement placé au sein d'une étuve durant 20 à 30 minutes, par exemple, à une température relativement proche de la température de fusion du polymère. La température au centre du matériau est ainsi homogénéisée, ce qui évite des déformations des parties découpées dues à la relaxation de contraintes dans le matériau. Le tube est ensuite refroidi avant d'être découpé.

Le tube isolant est introduit dans la machine 202, tel que son axe principal D soit parallèle à l'axe de guidage Z.

Le tube isolant est alors entraîné en translation selon l'axe de guidage Z.

Pour obtenir des parties isolantes hélicoïdales, le tube isolant est entraîné en rotation autour de son axe principal D pendant la translation.

La vitesse de rotation et de translation sont notamment choisies par rapport à l'angle d'hélice souhaité de la pièce.

Les outillages de découpe découpent le tube isolant en plusieurs parties isolantes à bords droits.

Les parties isolantes 30 ont une longueur maximale comprise entre 1 m et 4 m. Les parties isolantes 30 sont ainsi manipulables par des opérateurs ou un moyen mécanique d'aide au levage et à la manipulation. Le moyen mécanique est du type comprenant des vérins hydrauliques disposés en bas des parties isolantes et des bras pilotés d'assistance ou de réduction du poids disposés sur les côtés des parties isolantes.

Dans un mode de réalisation, le tube isolant a une longueur supérieure à la longueur maximale souhaitée pour les parties isolantes. Le tube est alors également découpé selon au moins un plan radial. Cette étape est réalisée avant ou après la découpe en hélice.

Elles peuvent être stockées après fabrication au voisinage d'un poste de montage de l'enveloppe isolante 16 sur le tube interne 14.

Après les étapes de fourniture d'un tube interne 100 et de parties isolantes 102, se déroule l'étape de montage 104.

Tout d'abord, une couche discontinue 44, telle que décrite précédemment, est mise en place sur le tube interne 14. Les parties isolantes 46 de la couche discontinue 44 sont placées espacées angulairement les unes des autres. Elles définissent entre elles des rainures 48.

Les rainures 48 sont inondées avec de l'eau de mer ou avec de l'eau inhibée, c'est-à-dire de l'eau comportant des agents inhibiteurs de corrosion tels que des composés amines.

Au moins une ligne fonctionnelle 20 est disposée dans les rainures 48. Chaque ligne 20 est déroulée à partir d'une bobine et introduite dans une rainure 48. La ligne 20 est déroulée en rotation autour du tube interne 14, par exemple similairement au procédé décrit au sein du document FR 2 948 164 A1. La ligne 20 est éventuellement plaquée contre le tube interne 14 avec un organe de poussée.

Les parties isolantes 30 sont alors montées autour de la couche discontinue 44 pour former une première couche. Elles sont simplement assemblées les unes aux autres en les plaçant côte à côte les unes avec les autres avec un éventuel jeu circonférentiel et en les appliquant sur la couche juste en-dessous. Elles entourent le tube 14 sur au moins une circonférence autour de l'axe X, puis d'autres parties isolantes 30 sont montées aux extrémités axiales de chaque partie isolante pour couvrir une longueur croissante du tube.

Une pluralité de couches peut ainsi être montée autour du tube interne en les appliquant à chaque fois sur les parties de la couche juste en-dessous.

Dans un mode de réalisation particulier du procédé, l'enveloppe isolante 16 comprend au moins deux couches isolantes non discontinues. Les deux couches isolantes, ici nommées couche supérieure et couche inférieure, ont avantageusement le même nombre de parties isolantes 30, ayant sensiblement la même forme.

Avant l'étape de montage 104, chaque partie isolante de la couche supérieure est superposée à une partie isolante de la couche inférieure afin de former des sections isolantes 39A, 39B, 39C.

La superposition est réalisée avec un certain décalage circonférentiel 36 et/ou longitudinal 38. Chaque section isolante est ainsi munie d'au moins un bord 32, 34 en forme de marche.

Les parties isolantes superposées sont avantageusement collées, thermosoudées ou assemblées à l'aide d'un moyen de fixation du type vis ou rivet l'une avec l'autre pour former les sections isolantes 39A, 39B, 39C.

La partie isolante de la couche supérieure est par exemple maintenue dans un patron. La face interne, destinée à être en contact avec la partie isolante de la couche intérieure, est maintenue vers le haut.

Des points de colle ou de chauffage sont effectués à différents endroits de la face interne.

La partie isolante de la couche inférieure est ensuite superposée avec la partie isolante de la couche supérieure avec un décalage donné.

Un vérin ou un poids maintient la partie isolante de la couche inférieure plaquée contre la face interne de la partie isolante de la couche supérieure, jusqu'à adhésion ou fusion des points.

Lors de l'étape de montage 104, les parties isolantes superposées sont montées par section isolante 39A, 39B, 39C autour du tube interne 14, similairement à l'étape de montage précédemment décrite.

Après l'étape de montage 104, le tube interne 14 est entouré de l'enveloppe isolante 16. L'enveloppe isolante 16 est maintenue autour du tube 14 pendant le montage par le biais de bande plastique ou métallique (strap).

L'étape 106 de formation de la couche externe 18 se déroule alors.

Au moins une bande externe 50, telle que décrite précédemment, est fournie. La bande externe 50 est enroulée autour de l'enveloppe isolante 16, par exemple à l'aide d'une rubanneuse. La tension de pose de la bande externe 50 est, par exemple, comprise entre 500 kg et 1 000 kg pour des bandes de largeur sensiblement égale à 130 mm.

La bande externe 50 est alors chauffée à une température donnée, par exemple à l'aide d'un laser ou un pistolet à air chaud. La température est par exemple comprise entre 100°C et 150°C. Cela entraîne une fusion partielle ou totale de la bande externe avec elle-même ou une bande externe adjacente.

La bande est ici partiellement fusionnée sur toute la circonférence de la conduite à intervalle régulier, par exemple compris entre 1 m et 15 m. La fusion partielle est ici réalisée tous les 3 m, 6 m ou 12 m avec des points d'arrêt forcés tous les 200 m à 500 m.

A la fin de l'étape 106 de formation de la couche externe 18, la conduite rigide 10 est directement utilisable.

Le procédé est facile à mettre en œuvre et ne nécessite pas de machines lourdes d'assemblage.

La forme hélicoïdale permet notamment d'améliorer le comportement des parties isolantes lorsque celles-ci sont enroulées et/ou déroulées pour la pose en reel-lay de la conduite et de minimiser, voire de supprimer, le fait que les parties isolantes 30 ne soient supportées que d'un seul côté au-dessus des rainures 48 accueillant la ligne fonctionnelle 20.

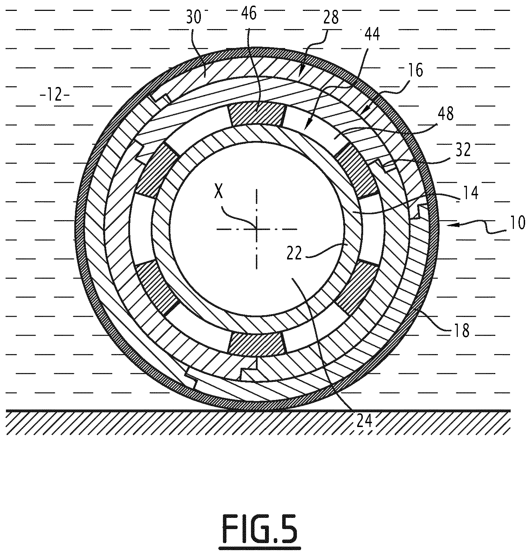

Dans une variante représentée sur la figure 5, les bords longitudinaux 32 des parties isolantes 30 ont une forme de marche, c'est-à-dire que les parties isolantes 30 présentent un profil en escalier.

Les bords longitudinaux 32 de chaque tronçon isolant présentent alors un gradin circonférentiel 36.

Les bords adjacents de deux parties isolantes adjacentes ont des formes complémentaires.

Au cours de l'étape de découpe du tube isolant, la machine est adaptée pour découper le tube isolant selon un profil en escalier pour obtenir des parties isolantes présentant au moins un bord longitudinal en forme de marche. Les outillages de découpe de la machine sont ainsi adaptés à la découpe en escalier.

La machine comprend, par exemple, à la place de chaque outillage de découpe un ensemble de trois lames, dont une première et une deuxième lames parallèles et une troisième lame perpendiculaire joignant les deux lames parallèles. Les deux lames parallèles réalisent une découpe radiale du tube. La troisième lame découpe le tube isolant selon un plan tangentiel au tube.

La première lame parallèle s'étend de la troisième lame vers l'extérieur. La deuxième lame parallèle s'étend de la troisième lame vers l'intérieur.

Alternativement au système de guidage décrit, la machine 202 comprend deux vis sans fin au niveau des extrémités qui permettraient le déplacement en translation du tube isolant à découper.

Dans une autre variante, en remplacement de l'étape de découpe des parties isolantes du procédé tel que décrit précédemment, les parties isolantes 30 sont moulées directement dans la forme voulue.

Les bords longitudinaux 32 et/ou transversaux 34 sont moulés droit ou de sorte à former un gradin circonférentiel 36 et/ou longitudinal 38.

Dans un mode de réalisation, les parties isolantes 46 sont extrudées ou moulées à plat. Elles sont ensuite mises sous forme d'hélice à chaud sur un calibre.

Alternativement, le procédé de fabrication des parties isolantes 46 est identique au procédé de fabrication des parties isolantes 30 de l'enveloppe isolante, par exemple par découpe d'un tube isolant en hélice.

En variante du procédé décrit précédemment, lors de l'étape de montage 104, au moins une couche est assemblée telle que chacune de ses parties isolantes est partiellement superposée avec les parties isolantes adjacentes, et non placées côte à côte.

Lors de l'étape de montage 104, le premier bord latéral de chaque partie isolante est placé en-dessous d'une première partie isolante adjacente et le deuxième bord latéral de la partie isolante est placé au-dessus d'une deuxième partie isolante adjacente.

L'enveloppe isolante 16 comprend dans ce mode de réalisation entre deux et quatre couches isolantes, chacune ayant une épaisseur de 10 mm à 15 mm.

Les couches isolantes sont réalisées avec un matériau souple, par exemple en mousse syntactique de polyuréthane.

L'application de la bande externe 50 est réalisée avec une tension plus élevée que précédemment, par exemple jusqu'à deux fois plus élevée. La tension lors de l'application de la bande externe est par exemple sensiblement égale à 2000 kg.

Le reste du procédé est semblable à ce qui a été décrit précédemment.

Dans un autre mode de réalisation, la conduite ne comprend pas de ligne fonctionnelle 20. Les parties isolantes 46 sont alors jointives, c'est-à-dire qu'il y a absence des rainures 48.

En variante du procédé précédemment décrit, la conduite ne comprend pas de couche discontinue 44. La ligne fonctionnelle 20 est alors placée autour et en contact avec le tube interne 14, avant la mise en place des parties isolantes 30 autour du tube interne 14.

Dans un autre mode de réalisation, la ligne fonctionnelle 20 est disposée avant la mise en place des parties isolantes 46.

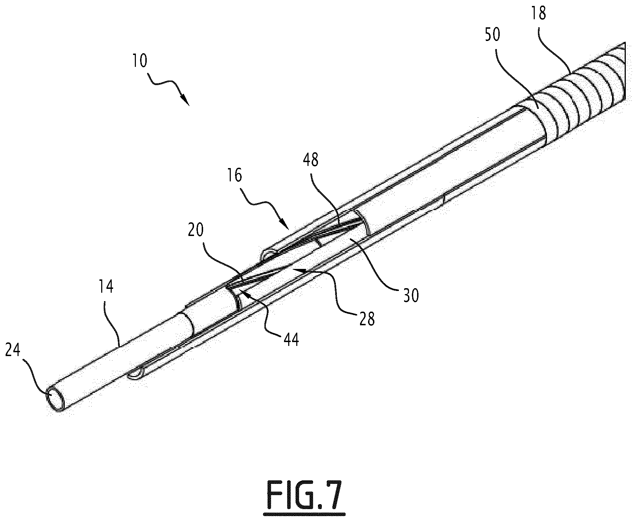

L'ensemble du procédé est également adapté au cas où les parties isolantes 30 ne sont pas hélicoïdales comme illustré par la figure 7. Les étapes 100 de fourniture d'un tube interne, de montage 104 et de formation 106 de la couche externe sont semblables. L'étape 102 de fourniture de parties isolantes 30 diffère si les parties isolantes 30 sont réalisées par une étape de découpe d'un tube isolant par le fait que le tube isolant n'est pas entraîné en rotation pendant la découpe. Les parties isolantes 30 présentent alors des bords latéraux droits.

Il est également intéressant de superposer les parties isolantes non hélicoïdales deux à deux de deux couches différents avec un décalage donné pour obtenir un gradin circonférentiel ou longitudinal.

Dans l'invention qui vient d'être décrite, les parties hélicoïdales sont assemblées successivement sur la conduite, en étant directement manipulables par des opérateurs ou des robots. Le procédé selon l'invention est donc très simple à mettre en œuvre. Il ne nécessite pas d'outillage complexe, notamment une bobineuse rotative. Il est alors possible de réaliser l'assemblage directement sur les bases d'assemblage et de réaliser la pose en déroulé (ou reel-lay). Il est également adapté pour un montage en S-lay.

Selon la variante dans laquelle la conduite ne comprend pas de ligne fonctionnelle 20, de manière avantageuse, les parties isolantes 46 délimitent entre elles un jeu circonférentiel.

Dans une autre variante, la couche externe 18 est une gaine. Celle-ci-est notamment formée par extrusion.

En outre, la couche externe 18 peut être perméable. Par exemple, l'épaisseur de la gaine est suffisamment faible afin de permettre le passage de l'eau environnante. Alternativement, la couche externe 18 est imperméable. Un système de vanne est avantageusement prévu pour permettre l'inondation des rainures 48 par exemple.

## Revendications

1. Procédé d'assemblage d'une conduite rigide (10) destinée à être placée dans une étendue d'eau (12), la conduite rigide (10) comprenant un tube interne métallique (14), une enveloppe isolante (16) d'isolation thermique formée d'un assemblage de parties isolantes (30) et une couche externe (18), le procédé comprenant les étapes suivantes :
- fourniture (100) du tube interne métallique (14),
- formation de l'enveloppe isolante (16), et
- formation (106) de la couche externe (18) autour de l'enveloppe isolante (16),
**caractérisé en ce que** le procédé comprend une étape de fourniture (102) d'une pluralité de parties isolantes (30) hélicoïdales et une étape (104) de montage des parties isolantes (30) hélicoïdales autour du tube interne (14) pour former l'enveloppe isolante (16),
et **en ce que** le procédé comprend une étape préalable de découpe d'un tube isolant en parties isolantes (30) de forme hélicoïdale avant l'étape de montage (104).

2. Procédé selon la revendication 1, dans lequel, lors de l'étape de découpe, le tube isolant est découpé dans son épaisseur en plusieurs parties isolantes (30) selon un profil en escalier pour obtenir des parties isolantes présentant au moins un bord (32) en forme de marche.

3. Procédé selon l'une quelconque des revendications 1 ou 2, dans lequel, lors de l'étape de découpe du tube isolant, le tube isolant est découpé en au moins trois parties isolantes (30) hélicoïdales.

4. Procédé selon l'une quelconque des revendications précédentes, comprenant une étape de superposition décalée de deux parties isolantes (30) pour former une section isolante (39A, 39B, 39C) hélicoïdale munie d'au moins un bord (33, 35) en forme de marche.

5. Procédé selon la revendication 4, dans lequel les parties isolantes (30) sont superposées avant l'étape de montage (104).

6. Procédé selon l'une quelconque des revendications 4 ou 5, dans lequel les deux parties isolantes (30) superposées sont assemblées l'une sur l'autre pour former avant leur montage des sections isolantes (39A, 39B, 39C) manipulables d'un seul tenant.

7. Procédé selon l'une quelconque des revendications précédentes, comprenant une étape de superposition des parties isolantes (30), tel que chaque partie isolante (30) comprend un premier bord latéral et un deuxième bord latéral, le premier bord latéral étant situé en-dessous d'une première partie isolante adjacente et le deuxième bord latéral étant situé au-dessus d'une deuxième partie isolante adjacente.

8. Procédé selon l'une quelconque des revendications précédentes, dans lequel les parties isolantes (30) ont une longueur comprise entre 1 m et 4 m.

9. Procédé selon l'une quelconque des revendications précédentes, dans lequel l'étape de formation de la couche externe (18) comprend une étape de fourniture d'au moins une bande externe (50) et une étape d'enroulage de la bande externe (50) autour des parties isolantes (30).

10. Procédé selon la revendication 9, **caractérisé en ce que** l'étape de formation de la couche externe (18) comprend une étape de fusion au moins partielle de la bande externe (50) après l'étape d'enroulage de la bande externe (50).

11. Procédé selon l'une quelconque des revendications précédentes, dans lequel les parties isolantes (30) hélicoïdales présentent un angle d'hélice par rapport à un axe longitudinal (X) du tube interne (14) compris entre 0° et 75°, l'angle d'hélice étant différent de 0°.

## Patentansprüche

1. Verfahren zum Zusammenbau einer starren Leitung (10), die vorgesehen ist, in einem Gewässer (12) angeordnet zu werden, wobei die starre Leitung (10) ein metallisches Innenrohr (14), eine isolierende Umhüllung (16) zur Wärmeisolierung, die von einer Zusammensetzung von isolierenden Teilen (30) gebildet wird, und eine Außenschicht (18) umfasst, wobei das Verfahren die folgenden Schritte umfasst:
- Bereitstellen (100) des metallischen Innenrohrs (14),
- Bilden der isolierenden Umhüllung (16) und
- Bilden (106) der Außenschicht (18) um die isolierende Umhüllung (16) herum,
**dadurch gekennzeichnet, dass** das Verfahren einen Schritt des Bereitstellens (102) einer Mehrzahl von spiralförmigen isolierenden Teilen (30) und einen Schritt (104) der Montage der spiralförmigen isolierenden Teile (30) um das Innenrohr (14) herum, umfasst, um die isolierende Umhüllung (16) zu bilden,
und dass das Verfahren einen vorangehenden Schritt des Schneidens eines isolierenden Rohrs in isolierende Teile (30) einer Spiralform vor dem Schritt der Montage (104) umfasst.

2. Verfahren nach Anspruch 1, bei dem während des Schrittes des Schneidens das isolierende Rohr in seiner Dicke in mehrere isolierende Teile (30) gemäß einem treppenförmigen Profil geschnitten wird, um isolierende Teile zu erhalten, die mindestens einen Rand in Stufenform aufweisen.

3. Verfahren nach einem beliebigen der Ansprüche 1 oder 2, bei dem während des Schrittes des Schneidens des isolierenden Rohrs das isolierende Rohr in mindestens drei spiralförmige isolierende Teile (30) geschnitten wird.

4. Verfahren nach einem beliebigen der vorhergehenden Ansprüche, das einen Schritt des versetzten Übereinanderlegens von zwei isolierenden Teilen (30) umfasst, um einen spiralförmigen isolierenden Abschnitt (39A, 39B, 39C) zu bilden, der mit mindestens einem Rand (33, 35) in Stufenform versehen ist.

5. Verfahren Anspruch 4, bei dem die isolierenden Teile (30) vor dem Schritt der Montage (104) übereinandergelegt werden.

6. Verfahren nach einem beliebigen der Ansprüche 4 oder 5, bei dem die zwei übereinanderliegenden isolierenden Teile (30) aufeinandergefügt werden, um vor ihrer Montage isolierende handhabbare Abschnitte (39A, 39B, 39C) eines einzigen Stücks zu bilden.

7. Verfahren nach einem beliebigen der vorhergehenden Ansprüche, das einen Schritt des Übereinanderlegens der isolierenden Teile (30) derart umfasst, dass jedes isolierende Teil (30) einen ersten seitlichen Rand und einen zweiten seitlichen Rand umfasst, wobei der erste seitliche Rand unter einem ersten benachbarten isolierenden Teil liegt und der zweiten seitlichen Rand über einem zweiten benachbarten isolierenden Teil liegt.

8. Verfahren nach einem beliebigen der vorhergehenden Ansprüche, bei dem die isolierenden Teile (30) eine Länge zwischen 1 m und 4 m aufweisen.

9. Verfahren nach einem beliebigen der vorhergehenden Ansprüche, bei dem der Schritt des Bildens der Außenschicht (18) einen Schritt des Bereitstellens mindestens eines Außenbandes (50) und einen Schritt des Umwickelns des Außenbandes (50) um die isolierenden Teile (30) herum umfasst.

10. Verfahren nach Anspruch 9, **dadurch gekennzeichnet, dass** der Schritt des Bildens der Außenschicht (18) einen Schritt des Verschmelzens des Außenbandes (50) zumindest teilweise nach dem Schritt des Umwickelns des Außenbandes (50) umfasst.

11. Verfahren nach einem beliebigen der vorhergehenden Ansprüche, bei dem die spiralförmigen isolierenden Teile (30) einen Spiralwinkel in Bezug auf eine Längsachse (X) des Innenrohrs (14) zwischen 0° und 75° aufweisen, wobei der Spiralwinkel unterschiedlich zu 0° ist.

## Claims

1. A method for assembling a rigid pipe (10) intended to be placed in a body of water (12), the rigid pipe (10) comprising a metallic inner tube (14), a thermally insulating insulation jacket (16) formed from an assembly of insulating parts (30) and an outer layer (18), the method comprising the following steps:
- providing (100) the metallic inner tube (14),
- forming the insulation jacket (16), and
- forming (106) the outer layer (18) around the insulation jacket (16),
**characterized in that** the method comprises a step for providing (102) a plurality of helical insulating parts (30) and a step (104) of mounting the helical insulating parts (30) around the inner tube (14) in order to form the insulation jacket (16),
and **in that** the method comprises a prior step for cutting an insulating tube into helical insulating parts (30) before the mounting step (104).

2. The method according to claim 1, wherein during the cutting step, the insulating tube is cut in its thickness into several insulating parts (30) in a stairstep profile to obtain insulating parts having at least one stair-forming edge (32).

3. The method according to any one of claims 1 or 2, wherein, during the step for cutting the insulating tube, the insulating tube is cut into at least three helical insulating parts (30).

4. The method according to any one of the preceding claims, comprising a step for offset superposition of two insulating parts (30) to form a helical insulating section (39A, 39B, 39C) provided with at least one stair-forming edge (33, 35).

5. The method according to claim 4, wherein the insulating parts (30) are superimposed before the mounting step (104).

6. The method according to any one of claims 4 or 5, wherein the two superimposed insulating parts (30) are assembled on one another to form, before they are mounted, insulating sections (39A, 39B, 39C) that can be manipulated as a single piece.

7. The method according to any one of the preceding claims, comprising a step for superimposing insulating parts (30), such that each insulating part (30) comprises a first side edge and a second side edge, the first side edge being situated below a first adjacent insulating part and the second side edge being situated above a second adjacent insulating part.

8. The method according to any one of the preceding claims, wherein the insulating parts (30) have a length comprised between 1 m and 4 m.

9. The method according to any one of the preceding claims, wherein the step for forming the outer layer (18) comprises a step for providing at least one outer strap (50) and a step for winding the outer strap (50) around the insulating parts (30).

10. The method according to claim 9, **characterized in that** the step for forming the outer layer (18) comprises a step for at least partially melting the outer strap (50) after the step for winding the outer strap (50).

11. The method according to any one of the preceding claims, wherein the helical insulating parts (30) have a helix angle relative to a longitudinal axis (X) of the internal tube (14) comprised between 0° and 75°, the helix angle being different from 0°.
